# EUROPÄISCHE PATENTSCHRIFT

(11) **EP 3 221 753 B1**
(45) Veröffentlichungstag und Bekanntmachung des Hinweises auf die Patenterteilung: **22.04.2020**
(21) Anmeldenummer: 15797334.8
(22) Anmeldetag: 19.11.2015
(51) Int. Cl.: G03H 1/00, G03H 1/02, G03H 1/28, G03H 1/26, B42D 25/328

(54) **MEHRSCHICHTKÖRPER UND VERFAHREN ZU DESSEN HERSTELLUNG**
MULTI-LAYER BODY AND METHOD FOR THE PRODUCTION THEREOF
CORPS MULTICOUCHES ET PROCÉDÉ DE FABRICATION DE CELUI-CI

(30) Priorität: 19.11.2014 DE 102014116940
(43) Veröffentlichungstag der Anmeldung: 27.09.2017
(73) Patentinhaber: Leonhard Kurz Stiftung & Co. KG, 90763 Fürth (DE)
(72) Erfinder: PFORTE, Klaus, 90522 Oberasbach (DE); BREHM, Ludwig, 91325 Adelsdorf (DE)
(74) Vertreter: Louis Pöhlau Lohrentz
(86) Internationale Anmeldenummer: PCT/EP2015/077087
(87) Internationale Veröffentlichungsnummer: WO 2016/079233

(56) Entgegenhaltungen:
- EP-A1- 2 458 452
- WO-A1-2013/110565
- JP-A- 2001 293 982
- US-A1- 2014 002 873

## Beschreibung

Die Erfindung betrifft einen Mehrschichtkörper, ein Verfahren zu dessen Herstellung, ein Sicherheitselement mit einem solchen Mehrschichtkörper und ein Sicherheitsdokument mit einem derartigen Sicherheitselement.

Hologramme werden als Sicherheitselemente zum Schutz von Sicherheitsdokumenten wie Banknoten, Geldersatzmittel, Kreditkarten, Pässen oder ID-Dokumenten sowie zur Produktsicherung eingesetzt. Bei Massenprodukten werden häufig Oberflächenhologramme eingesetzt, durch die sich interessante optisch variable Effekte, beispielsweise Bewegungseffekte, erzielen lassen und die sich durch eine hohe Lichtstärke auszeichnen.

Volumenhologramme, auch als Weißlichthologramme bezeichnet, beruhen im Gegensatz zu Oberflächenhologrammen auf der Lichtbeugung an den Braggschen Ebenen im Inneren einer transparenten Schicht, die dadurch lokale Brechzahlunterschiede aufweist.

Zur Herstellung eines Mehrschichtkörpers, welcher ein Volumenhologramm enthält, kann ein Oberflächenrelief als Master eingesetzt werden. Die Vorderseite des Masters wird unmittelbar oder unter Zwischenschaltung eines transparenten optischen Mediums in Kontakt mit einer fotosensitiven Schicht des Mehrschichtkörpers gebracht, in der das Volumenhologramm eingezeichnet werden soll. Anschließend wird der Master durch die fotosensitive Schicht hindurch mit kohärentem Licht belichtet, wobei sich durch Überlagerung des auf den Master eingestrahlten und des von dem Master gebeugten Lichts ein Interferenzmuster ausbildet, welches in der fotosensitiven Schicht als Volumenhologramm aufgezeichnet wird. Das so in die fotosensitive Schicht eingebrachte Volumenhologramm wird sodann nach Aushärtung der fotosensitiven Schicht fixiert. Durch eine spezielle Ausgestaltung des Masters lassen sich hierbei zwei oder mehr getrennte Bildinformationen in die fotosensitive Schicht einschreiben.

Volumenhologramme weisen generell eine hohe Transparenz auf und sollten daher auf dunkle Hintergründe appliziert werden, um eine gute Sichtbarkeit bzw. eine hohe Brillanz der optischen Effekte zu gewährleisten. Dies macht oft aufwändige Vorbereitungsarbeiten an den Substraten, auf die solche Sicherheitselemente appliziert werden sollen, notwendig.

Die US 2014/0002873 A1 betrifft ein Sicherheitselement in Form eines mehrschichtigen Folienkörpers, welches eine Volumenhologrammschicht aufweist, sowie ein Verfahren zur Herstellung eines solchen Sicherheitselements.

Die WO 2013/110565 A1 beschreibt ein Sicherheitsdokument, ein Verfahren zur Herstellung eines Sicherheitsdokuments sowie ein Verfahren zur Herstellung eines individualisierten Sicherheitsdokuments.

Die EP 2 458 452 A1 betrifft ein Hologrammlaminat und ein Verfahren zum Herstellen des Hologrammlaminats.

Die JP 2001 293982 A beschreibt ein optisches Informationsaufzeichnungsmedium umfassend eine Beugungsstruktur und eine Reflexionsschicht.

Der Erfindung liegt nun die Aufgabe zugrunde, einen verbesserten Mehrschichtkörper sowie ein Verfahren zu dessen Herstellung anzugeben. Der Erfindung liegt ferner die Aufgabe zugrunde, ein Sicherheitselement und Sicherheitsdokument mit einem solchen Mehrschichtkörper anzugeben.

Erfindungsgemäß wird diese Aufgabe mit dem Gegenstand der Ansprüche 1, 10, 11 und 12 gelöst.

Ein solcher Mehrschichtkörper umfasst eine Volumenhologrammschicht und eine auf einer der Oberfläche der Volumenhologrammschicht angeordnete partielle opake Schicht, die in einem ersten Bereich vorhanden und in einem zweiten Bereich nicht vorhanden ist.

Ein derartiger Mehrschichtkörper ist erhältlich durch ein Verfahren mit den Schritten:
- Bereitstellen einer Volumenhologrammschicht,
- Aufbringen einer partiellen opaken Schicht auf eine Oberfläche der Volumenhologrammschicht, wobei die partielle opake Schicht in einem ersten Bereich aufgebracht wird und einem zweiten Bereich nicht aufgebracht wird.
Ein auf diese Weise erhaltener Mehrschichtkörper kann Anwendung als ein Sicherheitselement zur Authentifizierung von Sicherheitsdokumenten wie Banknoten, Wertpapieren, Ausweisdokumenten, Führerscheinen, Kreditkarten, Pass- oder Visadokumenten finden.
Der Mehrschichtkörper umfasst ferner eine Dekorlage, wobei die partielle opake Schicht zwischen der Dekorlage und der Volumenhologrammschicht angeordnet ist.

Zusätzlich kann eine Dekorlage auch auf einem Substrat eines Sicherheitsdokuments vorgesehen sein, wobei ein Sicherheitselement auf Basis des beschriebenen Mehrschichtkörpers auf die Dekorlage des Substrats aufgebracht ist.
In beiden Fällen weisen die jeweiligen Dekorlagen vergleichbare Eigenschaften auf und erzielen den gleichen optischen Effekt. Wenn im Folgenden also die Eigenschaften der Dekorlage erläutert werden, bezieht sich dies sowohl auf in den Mehrschichtkörper integrierte Dekorlagen, als auch auf Dekorlagen, die getrennt vom Mehrschichtkörper auf einem Substrat eines Sicherheitsdokuments bereitgestellt werden.

Bei einem Sicherheitselement kann es sich beispielsweise um eine Laminierfolie, eine Prägefolie, eine Klebefolie oder dergleichen handeln, von der der Mehrschichtkörper auf ein Objekt übertragen werden kann. Auch Sicherheitsstreifen, Sicherheitsfäden, Sicherheitsfenster oder dergleichen zur Integration in Dokumente sind denkbar.

Wie bereits erwähnt, sind bekannte Mehrschichtkörper mit Volumenhologrammen stets transparent und sollten für eine vorteilhafte Brillanz der optischen Effekte auf einen dunklen Untergrund appliziert werden, so dass aufwändige Vorarbeiten, wie z. B. Einfärben, Bedrucken, Beschichten am Substrat nötig sind. Dies ist bei dem beschriebenen Mehrschichtkörper nicht mehr nötig. Aufgrund der partiellen opaken Schicht kann ein solcher Mehrschichtkörper auf beliebige Hintergründe appliziert werden, ohne dass die optische Qualität des Mehrschichtkörpers leidet. Auf eine Vorbereitung des Hintergrunds kann also verzichtet werden, so dass die Weiterverarbeitung des Mehrschichtkörpers vereinfacht wird.

Weiterhin wird auf diese Weise die Fälschungssicherheit derart erhaltener Sicherheitselemente erhöht, weil das Zusammenspiel der Komponenten des Mehrschichtkörpers, also von Volumenhologramm, opaker Schicht und Dekorlage entsprechend schwer zu fälschen ist bzw. den Fälschungsaufwand erhöht.

Ein Bereich kann zusammenhängend sein, aber auch von einer Mehrzahl nicht zusammenhängender Teilbereiche gebildet werden.

Ein opaker Bereich ist ein Bereich mit einer Transmissivität im Wellenlängenbereich des für den menschlichen Betrachters sichtbaren Lichts von weniger als 40 %, bevorzugt von weniger als 30 %, besonders bevorzugt von weniger als 20 %.

Ein transparenter Bereich ist ein Bereich mit einer Transmissivität im Wellenlängenbereich des für den menschlichen Betrachters sichtbaren Lichts von mehr als 50 %, bevorzugt von mehr als 70 %, besonders bevorzugt von mehr als 80 %.

Erfindungsgemäß weist die opake Schicht eine Luminanz L* im CIELAB-Farbraum von 0 bis 50, bevorzugt von 0 bis 30, auf.

Die Luminanz L* der eingesetzten opaken Schicht wird dabei insbesondere mittels des Messsystems CIE-LAB Datacolor SF 600 bestimmt, das auf einem Spektralphotometer basiert. Bei der farbmetrischen Bestimmung von Farbabständen bei Körperfarben nach der CIELAB-Formel L*a*b* steht der Wert L* für die Hell/Dunkel - Achse, der Wert a* für die Rot/Grün-Achse und der Wert b* für die Gelb/Blau-Achse. Der L*a*b*-Farbraum wird somit als dreidimensionales Koordinatensystem beschrieben, wobei die L* Achse die Helligkeit beschreibt und einen Wert zwischen 0 und 100 annehmen kann.

Die Messung der Helligkeit L* erfolgt bevorzugt unter folgenden Bedingungen:

| | |
|---|---|
| Messgeometrie: | diffus / 8° nach DIN 5033 und ISO 2496 |
| Durchmesser Messöffnung: | 9 mm |
| Spektralbereich: | 360 nm bis 700 nm nach DIN 6174 |
| Normlichtart: | D65 |

Es ist ferner bevorzugt, wenn der erste Bereich der opaken Schicht 1 % bis 99%, bevorzugt 50 % bis 95 % der Volumenhologrammschicht bedeckt.

Der genannte Bedeckungsgrad bezieht sich auf die von der Volumenhologrammschicht aufgespannte Fläche bei Betrachtung in Richtung der Flächennormalen. Die vorteilhaften Bereiche konnten dabei experimentell ermittelt werden.

Ist die Flächenbedeckung sehr hoch, sind nur sehr kleine Bereiche der weiteren Schicht sichtbar, was je nach Design sinnvoll sein kann.

Ist die Flächenbedeckung relativ gering, sind größere Bereiche der weiteren Schicht sichtbar. Je nach Helligkeit der weiteren Schicht und ihrem Kontrast zur dunklen Schicht kann dies bei anderen Designvarianten sinnvoll sein.

Ist der Kontrast zwischen opaker Schicht und Dekorlage sehr stark, d. h. ist die Dekorlage vergleichsweise hell und/oder stark reflektierend, ist es vorteilhaft, die Flächenbedeckung der opaken Schicht zu erhöhen, um ein optisches Überstrahlen des Volumenhologramms durch die Dekorlage zu begrenzen.

Ist der Kontrast zwischen opaker Schicht und Dekorlage weniger stark, d. h. ist die Dekorlage vergleichsweise wenig hell und/oder wenig reflektierend, ist es möglich, die Flächenbedeckung der opaken Schicht etwas zu verringern, weil trotzdem noch eine ausreichend gute Sichtbarkeit des Volumenhologramms ermöglicht ist.

Es ist auch möglich, dass die opake Schicht und die Dekorlage in bestimmten Bereichen gemeinsam ausgespart sind, um in diesen Bereichen das Volumenhologramm transparent zu belassen und einen ggf. hellen Untergrund des Substrats (z. B. weißes Papier oder Plastik) sichtbar zu machen. Damit kann beispielsweise der optische Effekt des Volumenhologramms in diesen ausgesparten Bereichen bewusst abgeschwächt bzw. die Brillanz verringert werden, um spezielle optische Effekte zu erzeugen. Insbesondere das direkt benachbarte und registergenaue bzw. lagegenaue Vorliegen von optischen Effekten mit hoher Brillanz (mit dunkler opaker Schicht und Dekorlage) und optischen Effekten mit geringerer Brillanz kann einen unverwechselbaren und gleichzeitig schwer fälschbaren optischen Eindruck erzeugen.

Es ist auch möglich, dass die Dekorlage in den zweiten Bereichen der opaken Schicht, in der die opake Schicht nicht vorhanden ist, ausgespart ist, um in diesen Bereichen das Substrat sichtbar zu belassen. D. h. das Substrat bildet den Hintergrund zu dem Volumenhologramm. Ist das Substrat beispielsweise helles, insbesondere weißes Papier oder Kunststoff, wird die Brillanz des Volumenhologramms entsprechend herabgesetzt bzw. verringert.

Das Substrat kann jedoch auch bereits Farbschichten oder andere dekorative Schichten aufweisen, welche dann durch die zweiten Bereiche der opaken Schicht und durch das transparente Volumenhologramm hindurch zumindest partiell sichtbar sind und ebenfalls einen Hintergrund zu dem Volumenhologramm bilden. Durch das Hindurchscheinen des Substrats durch die zweiten Bereiche der opaken Schicht lassen sich wiederum unverwechselbare und gleichzeitig schwer fälschbare optische Effekte erzeugen.

Erfindungsgemäß umfasst die opake Schicht zumindest einen Farbstoff, ein Pigment oder ein Effektpigment.

Neben der gewünschten Opazität können so auch Farbeffekte verwirklicht werden. Die genannten Bestandteile der opaken Schicht können auch kombiniert werden, um so komplexe Dekore zu erhalten, die nur schwer nachzuahmen sind und eine hohe Fälschungssicherheit gewährleisten.

Es ist ferner zweckmäßig, wenn die opake Schicht einen thermoplastischen Lack umfasst.
Dieser dient als Matrix für die die Opazität bestimmenden Pigmente und/oder Farbstoffe.
Bevorzugt weist dabei die opake Schicht eine Schichtdicke von 1 µm bis 5 µm, bevorzugt von 1 µm bis 3 µm auf.
Es ist ferner zweckmäßig, wenn der erste und/oder zweite Bereich zumindest graphisches Element, insbesondere ein Motiv, ein Bild, ein Symbol, ein Logo und/oder ein alphanumerisches Zeichen ausbildet.

Dieses graphische Element trägt zum Gesamtdesign des Mehrschichtkörpers bei und erhöht somit die Fälschungssicherheit. Je nach relativer Anordnung und Ausbildung der Schichten kann dieses Element gemeinsam mit dem Volumenhologramm sichtbar sein oder betrachtungswinkelabhängig unabhängig von diesem sichtbar sein.

Bevorzugt umfasst das graphische Element ein Endlosmotiv und/oder ein Einzelbildmotiv.

Dabei kann das graphische Element im Register, d. h. lagegenau relativ zu einem graphischen Element der Volumenhologrammschicht angeordnet sein.

Die Durchbrechungen der opaken Schicht im zweiten Bereich sind also entweder ein fortlaufendes Endlosmuster oder ein Einzelbild-Dekor oder eine Kombination davon. Die Durchbrechungen können (müssen aber nicht) dabei im Register, d. h. lagegenau relativ zum Motiv des Volumenhologramms angeordnet sein.

Das Volumenhologramm kann seinerseits ebenfalls entweder ein fortlaufendes Endlosmuster oder ein Einzelbild-Dekor oder eine Kombination davon aufweisen.

So können sich beispielsweise zwei Endlosdesigns unregistriert zufällig überlagern und ein gemeinsames Endlosdesign ausbilden, beispielsweise Blätter und Blüten. Die Überlagerung kann auch registriert, d. h. mit exakter Zuordnung/Lage erfolgen, beispielsweise Blätter und Blüten, die Blüten jeweils exakt an Freilassungen zwischen den Blättern.

Es kann sich ein Einzelbilddesign des Volumenhologramms mit einem unregistrierten oder auch registrierten Endlosdesign der dunklen Schicht überlagern, beispielsweise eine Einzelblüte mit einer Vielzahl von Blättern.

Bevorzugt ist die Volumenhologrammschicht aus einem UV-härtenden Photopolymer ausgebildet.

Dabei handelt es sich beispielsweise um das Fotopolymer Omni DEX 706 der Firma Dupont. Weiter ist auch die Verwendung von Fotopolymeren möglich, die als flüssige Substanz vorliegen und beispielsweise durch Einwirkung von UV-Licht polymerisiert und dadurch ausgehärtet werden. Es kann auch vorgesehen sein, das Fotopolymer als Schicht aufzugießen und durch eine schwache UV-Lichteinwirkung oder Wärmebehandlung vorzuhärten
Es ist weiter zweckmäßig, wenn die Volumenhologrammschicht eine Schichtdicke von 5 µm bis 100 µm, bevorzugt von 15 µm bis 25 µm aufweist.

Bevorzugt ist zwischen der Volumenhologrammschicht und der partiellen opaken Schicht eine Siegellackschicht angeordnet.

Dieser Siegellack versiegelt bzw. deckt die abgeformten Oberflächenstrukturen des Oberflächenmasters.

Ferner ist es vorteilhaft, wenn die Siegellackschicht aus einem UV-härtenden Lack ausgebildet ist, dessen Brechungsindex um höchstens 0,2 von einem Brechungsindex der Volumenhologrammschicht abweicht.

Die Siegellackschicht kann also gemeinsam mit der Volumenhologrammschicht gehärtet werden, so dass sich eine besonders gute Zwischenschichthaftung ergibt. Der geringe Unterschied in den Brechungsindices verbessert dabei die optischen Eigenschaften.

Es ist weiter bevorzugt, wenn die Dekorlage eine Farblackschicht umfasst. Die Farblackschicht kann dabei transparent, transluzent oder opak sein.

Hierdurch kann im einfachsten Fall bereits in Kombination mit den zweiten Bereichen der opaken Schicht ein farblich zum Volumenhologramm kontrastierendes Design bereitgestellt werden

Dabei ist es zweckmäßig, wenn die Farblackschicht zumindest einen Farbstoff, ein Pigment, ein Effektpigment, ein Dünnschichtsystem, und/oder ein cholesterisches Flüssigkristallsystem umfasst.

Ebenso möglich ist der alternative oder zusätzliche Einsatz von UVlumineszenten und/oder IR-anregbaren Farbstoffen (UV = ultraviolettes Licht; IR = Infrarotes Licht) und/oder Pigmenten in der Dekorlage. Damit können auch optisch variable Effekte in der Dekorlage verwirklicht werden.

Bevorzugt ist die Farblackschicht und/oder die opake Schicht in einer Komplementärfarbe zu einer Grundfarbe der Volumenhologrammschicht eingefärbt.

Es ist bekannt, dass Volumenhologramme eine hohe Transparenz aufweisen. Allerdings ist diese Transparenz in vielen Fällen nicht vollkommen klar und achromatisch, sondern das Volumenhologramm hat beispielsweise einen leicht rötlichen oder rosa Farbeindruck.

Will man vermeiden, dass die durch das Volumenhologramm hindurch sichtbare Dekorlage ebenfalls diesen Farbeindruck (rötlich, rosa) annimmt, sondern stattdessen achromatisch weiß wirkt, ist es vorteilhaft, die Dekorlage mit der Komplementärfarbe einer ähnlichen Sättigung einzufärben, um im Resultat dieser additiven Farbmischung einen achromatischen Farbeindruck für die Dekorlage zu erzeugen. Beispielsweise kann man dies bei einem rötlichen Volumenhologramm erreichen, indem man die weitere Schicht entsprechend gesättigt cyan bzw. türkis einfärbt. Rot und Cyan sind dabei die sich zu Weiß ergänzenden Komplementärfarben.

Ebenso kann man bei der opaken Schicht verfahren, indem man die dunkle Schicht entsprechend dunkel Cyan bzw. Türkis einfärbt, um als Resultat ein achromatisches Schwarz oder Grau zu erhalten.

Die beschriebene additive Farbmischung kann man dabei aber auch verwenden, um einen gewünschten chromatischen Farbton zu erzeugen, der erst durch die Farbmischung aus dem Farbton des Volumenhologramms und dem Farbton der Dekorlage und/oder der opaken Schicht entsteht.

Ferner ist es zweckmäßig, wenn die Dekorlage eine Replizierschicht, insbesondere aus einem thermoplastischen oder UV-härtenden Lack, mit einem Oberflächenrelief ist oder umfasst.

Hierdurch können auch in der Dekorlage optisch variable oder holographische Effekte erzielt werden, die das Volumenhologramm ergänzen und die Fälschungssicherheit erhöhen.

Bevorzugt umfasst dabei das Oberflächenrelief eine oder mehrere Reliefstrukturen ausgewählt aus der Gruppe diffraktives Gitter, Hologramm, Blazegitter, Lineargitter, Kreuzgitter, Hexagonalgitter, asymmetrische oder symmetrische Gitterstruktur, retroreflektierende Struktur, Mikrolinse, Mikroprisma, Beugungsstruktur Nullter Ordnung, Mottenaugenstruktur oder anisotrope oder isotrope Mattstruktur, oder eine Überlagerung oder Kombination von zwei oder mehr der vorgenannten Reliefstrukturen.

Es ist dabei zweckmäßig, wenn eine Schichtdicke der Replizierschicht 1 µm bis 5 µm, bevorzugt von 1 µm bis 3 µm beträgt.

Weiter ist es bevorzugt, wenn die Dekorlage eine Reflexionsschicht umfasst.

Eine solche Reflexionsschicht kann für sich alleine stehen und in Verbindung mit den zweiten Bereichen der opaken Schicht ein zum Volumenhologramm kontrastierendes Design bereitstellen. Besonders vorteilhaft ist jedoch die Kombination einer Reflexionsschicht mit einer Replizierschicht, da so die Strukturen der Replizierschicht besonders gut sichtbar gemacht werden. Die Reflexionsschicht ist dabei insbesondere direkt auf das Oberflächenrelief der Replizierschicht aufgebracht, insbesondere aufgedampft.

Vorteilhafterweise ist die Reflexionsschicht als Metallschicht, bevorzugt aus Al, Cu, Ag, Au oder Legierungen aus den vorgenannten Metallen ausgebildet.

Die genannten Metalle können auch miteinander kombiniert werden, um so komplexere optische Eindrücke zu verwirklichen
Alternativ kann die Reflexionsschicht auch als HRI-Schicht (HRI = high refractive index), insbesondere aus ZnS, TiO₂ oder ZrO₂ ausgebildet sein.

Zweckmäßigerweise beträgt dabei die Schichtdicke der Reflexionsschicht von 5 nm bis 100 nm, bevorzugt von 10 nm bis 50 nm.

Ferner weist der Mehrschichtkörper bevorzugt eine Kleberschicht auf, die auf der der opaken Schicht abgewandten Seite der Dekorlage angeordnet ist.

Hierbei kann es sich um einen Heißkleber, einen Kaltkleber, einen optisch oder thermisch aktivierbaren Kleber oder dergleichen handeln, der eine Fixierung des Mehrschichtkörpers auf einem Objekt, beispielsweise einem Sicherheitsdokument, erlaubt.

Zweckmäßigerweise beträgt dabei eine Schichtdicke der Kleberschicht von 0,5 µm bis 15 µm, bevorzugt von 1 µm bis 8 µm.

Bevorzugt umfasst der Mehrschichtkörper ein Substrat, auf das die Volumenhologrammschicht aufgebracht ist.

Diese erleichtert beispielsweise einen flüssigen Auftrag des Materials der Volumenhologrammschicht und stabilisiert diese bei der Weiterverarbeitung. Das Substrat ist dabei bevorzugt mehrschichtig ausgebildet.

Bevorzugt umfasst das Substrat eine Trägerlage, insbesondere aus PET (Polyethylenterephthalat), PEN (Polyethylennaphthalat) oder BOPP (biaxially oriented polypropylene = biaxial gerecktes Polypropylen) die auf der der Dekorschicht abgewandten Seite des Substrats angeordnet ist.

Eine solche Trägerlage kann bevorzugt vor dem Aufbringen des Mehrschichtkörpers auf ein Objekt, beispielsweise ein Sicherheitsdokument, abgelöst werden. Die Trägerlage schützt und stabilisiert also den Mehrschichtkörper vor seiner endgültigen Anbringung, insbesondere während seiner Herstellung und während des Transports.

Zweckmäßigerweise beträgt dabei eine Schichtdicke der Trägerlage von 6 µm bis 50 µm, bevorzugt von 12 µm bis 50 µm.

Es ist ferner bevorzugt, wenn das Substrat eine Schutzschicht, insbesondere aus einem UV-härtenden Lack, aus PVC, Polyester oder einem Acrylat umfasst, die zwischen der Trägerlage und der Volumenhologrammschicht angeordnet ist.

Im Gegensatz zur Trägerlage verbleibt eine solche Schutzschicht vorzugsweise am Mehrschichtkörper, wenn dieser auf ein Objekt aufgebracht wird, und bildet dort dessen äußere Oberfläche. Die Schutzschicht kann die empfindlichen weiteren Schichten des Mehrschichtkörpers also vor Umwelteinflüssen, Verschmutzung, Kratzern und dergleichen schützen.

Dabei ist es zweckmäßig, wenn eine Schichtdicke der Schutzschicht 0,5 µm bis 10 µm, bevorzugt von 2 µm bis 5 µm beträgt.

In einer weiteren Ausführungsform umfasst das Substrat eine Ablöseschicht, insbesondere aus einem stark verfilmenden Acrylat, die zwischen der Trägerlage und der Schutzschicht angeordnet oder auch Teil der Schutzschicht ist.

Eine solche Ablöseschicht ermöglicht das einfache und beschädigungsfreie Ablösen beim Aufbringen des Mehrschichtkörpers auf ein Objekt.

Dabei beträgt zweckmäßigerweise eine Schichtdicke der Ablöseschicht von 100 nm bis 2 µm, bevorzugt von 500 nm bis 1 µm.

Es ist weiter bevorzugt, wenn das Substrat eine Haftvermittlerschicht, insbesondere aus einem Gemisch von UV-vernetzenden Monomeren, umfasst, die zwischen der Volumenhologrammschicht und der Schutzschicht angeordnet ist.

Hierdurch kann die Zwischenschichthaftung zwischen den genannten Schichten erhöht werden, so dass ein stabiler Schichtverbund erhalten wird.

Bevorzugt beträgt dabei eine Schichtdicke der Haftvermittlerschicht von 0,1 µm bis 3 µm, besonders bevorzugt von 0,5 µm bis 2 µm.

Es ist bevorzugt, wenn die partielle opake Schicht und/oder die Dekorlage durch Sprühen, Gießen, Rakeln, Druck, Transfer oder Laminieren aufgebracht wird.

Weiter bevorzugt wird die Volumenhologrammschicht durch Drucken, insbesondere durch ein verschmierendes Verfahren, z. B. Tiefdruck (Reverse Gravure) oder Rollensiebdruck, aufgebracht.
Ferner ist es vorteilhaft, wenn in die Volumenhologrammschicht ein Volumenhologramm eingebracht wird, insbesondere durch ein holographisches Kopierverfahren zur Ausbildung eines Transmissions- oder Reflexionshologramms und/oder unter Verwendung eines ein Oberflächenhologramm umfassenden Masters.

In einer nicht beanspruchten, alternativen Ausführung weist der Mehrschichtkörper eine Volumenhologrammschicht und eine partielle opake Schicht auf, welche opake Schicht in einem ersten Bereich vorhanden und in einem zweiten Bereich nicht vorhanden ist. Die Dekorlage ist bereits auf dem Substrat vorhanden, insbesondere aufgedruckt und/oder aufgeprägt worden.
Beispielsweise weist der Mehrschichtkörper eine Volumenhologrammschicht und die partielle opake Schicht auf. Auf dem Substrat ist beispielsweise in einem Bereich ein farbiges Motiv aufgedruckt, welches helle, mittlere und dunkle Farben aufweist. Benachbart und/oder überlappend zu dem farbigen Motiv ist auf dem Substrat noch ein optisch variables Element, beispielsweise ein teilmetallisiertes KINEGRAM® oder auch ein Dünnfilmelement mit Farbwechseleffekt aufgeprägt. Mit dem farbigen Motiv und dem optisch variablen Element überlappend wird nun der Mehrschichtkörper appliziert, wobei die partielle opake Schicht das optisch variable Element und/oder das farbige Motiv bereichsweise abdeckt und nur in den zweiten, transparenten Bereichen der opaken Schicht sichtbar lässt. Die partielle opake Schicht kombiniert mit dem farbigen Motiv und dem optisch variablen Element fungieren gemeinsam als Hintergrund für das Volumenhologramm, wobei die lokale Brillanz des Volumenhologramms abhängig ist von der lokalen Helligkeit der Farben des farbigen Motivs und der Helligkeit des optisch variablen Effekts des optisch variablen Elements, die an der jeweiligen lokalen Stelle mit dem Volumenhologramm überlappen.

Mit dieser Kombination des Mehrschichtkörpers mit einem vorhandenen Design auf einem Substrat lassen sich unverwechselbare und gleichzeitig schwer fälschbare optische Effekte erzeugen.

Die Erfindung wird nun anhand von Ausführungsbeispielen näher erläutert. Es zeigen:
- Fig. 1: Eine schematische Schnittdarstellung durch ein Ausführungsbeispiel eines Mehrschichtkörpers;
- Fig. 2: Eine schematische Darstellung eines Designs eines Ausführungsbeispiels eines Mehrschichtkörpers;
- Fig. 3: Eine schematische Darstellung eines Designs eines weiteren Ausführungsbeispiels eines Mehrschichtkörpers;
- Fig. 4: Eine schematische Darstellung eines Designs eines weiteren Ausführungsbeispiels eines Mehrschichtkörpers;
- Fig. 5: Eine schematische Darstellung eines Designs eines weiteren Ausführungsbeispiels eines Mehrschichtkörpers;
- Fig. 6: Eine schematische Darstellung eines Designs eines weiteren Ausführungsbeispiels eines Mehrschichtkörpers;
- Fig. 7: Eine schematische Darstellung eines Designs eines weiteren Ausführungsbeispiels eines Mehrschichtkörpers.

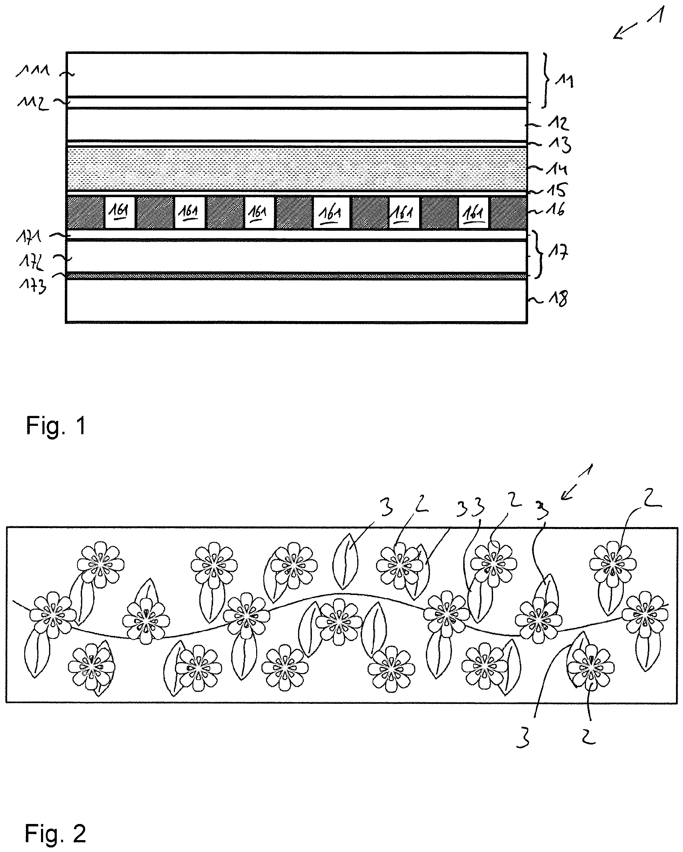

Ein im Ganzen mit 1 bezeichneter Mehrschichtkörper zur Verwendung als Sicherheitselement ist im Querschnitt in Fig. 1 gezeigt und umfasst ein Substrat 11, auf das eine Schutzlackschicht 12 aufgebracht ist. Das Substrat 11 ist selbst mehrschichtig aufgebaut und umfasst eine Trägerlage 111 und eine Ablöseschicht 112.

Auf die Schutzlackschicht 12 ist eine Haftvermittlerschicht 13 aufgebaut, auf der wiederum eine Volumenhologrammschicht 14 angeordnet ist. Diese ist auf ihrer dem Substrat 11 abgewandten Seite mit einer Siegellackschicht 15 versehen. Auf dem Siegellack 15 ist eine partielle opake Lackschicht 16 aufgebracht, die transparente Durchbrechungen 161 aufweist. Auf der substratfernen Seite der opaken Lackschicht 16 schließt sich eine Dekorlage 17 an, die im in Fig. 1 gezeigten Ausführungsbeispiel eine transparente Lackschicht 171, eine Replizierlackschicht 172 und eine Reflexionsschicht 173 umfasst.

Auf die dem Substrat 11 abgewandte Oberfläche der Dekorlage 17 ist schließlich noch eine Kleberschicht 18 aufgebracht, mittels welcher der Mehrschichtkörper 1 auf ein Objekt, beispielsweise ein Sicherheitsdokument, appliziert werden kann.

Die Trägerlage 111 des Mehrschichtkörpers ist vorzugsweise als Folie aus PET ausgebildet und bevorzugt zwischen 6 µm und 50 µm dick. Die Folie ist zweckmäßigerweise für Laserstrahlung, die für die Einbelichtung des Volumenhologramms in die Volumenhologrammschicht 14 verwendet wird, transparent.

Die Ablöseschicht 112 ist optional und besteht beispielsweise aus Wachskomponenten. Eine Ablöseschicht 112 wird verwendet, wenn die Trägerlage 111 vom Mehrschichtkörper 1 nach dem Aufbringen auf ein Objekt entfernt werden soll. Dies ist beispielsweise der Fall, wenn der Mehrschichtkörper 1 als Heißprägefolie ausgebildet ist. Bei als Laminierfolien ausgebildeten Mehrschichtkörpern 1 verbleibt die Trägerlage am Mehrschichtkörper, so dass auf eine Ablöseschicht verzichtet werden kann.

Eine Trennwirkung gegenüber der Trägerlage 111 kann auch die Schutzschicht 12 erfüllen und eine separate Ablöseschicht überflüssig machen. Dabei kann die Schutzschicht beispielsweise aus einem UV-härtenden oder thermoplastischen Lack bestehen. Geeignete Schutzlacke sind beispielsweise auf Basis PVC, Polyester oder Acrylaten formuliert und bevorzugt 1 µm bis 10 µm dick. Nach Ablösen der Trägerlage 111 schützt die Schutzschicht 12 den Mehrschichtkörper vor Umwelteinflüssen, Verkratzen und dergleichen.

Die Schutzschicht kann auch mehrschichtig ausgeführt sein. Beispielsweise weist die Schutzschicht drei Schichten aus Acrylat auf, wobei die erste Teilschicht ein hochmolekulares thermoplastisches Acrylat, die zweite Teilschicht ein mit Isocyanat (NCO) vernetzendes Acrylat und die dritte Schicht ein hochmolekulares thermoplastisches Acrylat ist.

Die Haftvermittlerschicht 13 verbessert die Haftung zwischen der Schutzschicht 12 und der Volumenhologrammschicht 14. Bevorzugt ist diese aus einem Gemisch von UV-vernetzenden Monomeren aufgebaut und weist eine Schichtdicke von 0,1 µm bis 3 µm, bevorzugt von 0,5 µm bis 2 µm auf.

Die Volumenhologrammschicht 14 ist aus einem Fotopolymer aufgebaut, bei dem es sich beispielsweise um das Fotopolymer Omni DEX 706 der Firma Dupont handelt. Weiter ist auch die Verwendung von Fotopolymeren möglich, die als flüssige Substanz vorliegen und beispielsweise durch Einwirkung von UV-Licht polymerisiert und dadurch ausgehärtet werden. Es kann auch vorgesehen sein, das Fotopolymer als Schicht aufzugießen und durch eine schwache UV-Lichteinwirkung oder Wärmebehandlung vorzuhärten.

Das Aufbringen der Volumenhologrammschicht erfolgt vorzugsweise mittels eines Druckverfahrens, vorzugsweise mittels verschmierenden Verfahren. Das Fotopolymer wird hierbei vorzugsweise in einer Schichtdicke von 5 bis 100 µm, weiter bevorzugt in einer Schichtdicke von etwa 20 µm.

Die Belichtung des Volumenhologramms erfolgt bevorzugt mit Hilfe eines Oberflächenmasters. Weiter ist es auch möglich, dass als Volumenhologramm-Master nicht ein mit einem Oberflächenrelief versehener Master verwendet wird, sondern ein Volumenhologramm und die Aufzeichnung des Volumenhologramms in der Volumenhologrammschicht durch ein übliches, holographisches Kopierverfahren zur Ausbildung eines Transmissions- oder Reflexionshologramms in der Volumenhologrammschicht 14 erfolgt.

Die Volumenhologrammschicht 14 ist UV-härtend, so dass bevorzugt auch die Schutzschicht 12 UV-härtend ausgeführt ist, um eine besonders gute Haftung zu erreichen. Ist die Schutzschicht thermoplastisch, ist die zwischen Schutzschicht 12 und Volumenhologramm 14 angeordnete Haftvermittlerschicht 13 insbesondere vorteilhaft.

Die Volumenhologrammschicht 14 ist auf ihrer dem Substrat 11 abgewandten Seite von einer Siegellackschicht 15 bedeckt. Dieser Siegellack ist wie die Volumenhologrammschicht UV-härtend und versiegelt die abgeformten Oberflächenstrukturen des Oberflächenmasters in der Volumenhologrammschicht 14. Der Siegellack weist dabei einen weitgehend identischen Brechungsindex wie das Volumenhologramm auf bzw. weicht davon um nicht mehr als 0,2 ab.
Die opake Lackschicht 16 besteht aus einem pigmentierten, möglichst opaken Lack, der vorzugsweise thermoplastisch ist. Er wird im Tiefdruck oder Siebdruck appliziert und ist 1 µm bis 5 µm dick.

Die opake Schicht hat eine Luminanz L* im CIELAB-Farbraum von 0 bis 50, bevorzugt von 0 bis 30.

Die Luminanz L* der opaken Schicht wird 16 dabei insbesondere mittels des Messsystems CIE-LAB Datacolor SF 600 bestimmt, das auf einem Spektralphotometer basiert. Bei der farbmetrischen Bestimmung von Farbabständen bei Körperfarben nach der CIELAB-Formel L*a*b* steht der Wert L* für die Hell/Dunkel-Achse, der Wert a* für die Rot/Grün-Achse und der Wert b* für die Gelb/Blau-Achse. Der L*a*b*-Farbraum wird somit als dreidimensionales Koordinatensystem beschrieben, wobei die L* Achse die Helligkeit beschreibt und einen Wert zwischen 0 und 100 annehmen kann.
Die Messung der Helligkeit L* erfolgt bevorzugt unter folgenden Bedingungen:

| | |
|---|---|
| Messgeometrie: | diffus / 8° nach DIN 5033 und ISO 2496 |
| Durchmesser Messöffnung: | 9 mm |
| Spektralbereich: | 360 nm - 700 nm nach DIN 6174 |
| Normlichtart: | D65 |

Die Durchbrechungen 161 der opaken Schicht 16 bilden dabei ein graphisches Element, insbesondere ein Motiv, ein Bild, ein Symbol, ein Logo und/oder ein alphanumerisches Zeichen aus.

Dieses graphische Element trägt zum Gesamtdesign des Mehrschichtkörpers 1 bei und erhöht somit die Fälschungssicherheit. Je nach relativer Anordnung und Ausbildung der Schichten kann dieses Element gemeinsam mit dem Volumenhologramm sichtbar sein oder betrachtungswinkelabhängig unabhängig von diesem sein.

Bevorzugt umfasst das graphische Element ein Endlosmotiv und/oder ein Einzelbildmotiv.

Dabei kann das graphische Element im Register zu einem graphischen Element der Volumenhologrammschicht angeordnet sein.

Die Durchbrechungen 161 der opaken Schicht 16 sind entweder ein fortlaufendes Endlosmuster oder ein Einzelbild-Dekor oder eine Kombination davon. Die Durchbrechungen können (müssen aber nicht) dabei im Register zum Motiv des Volumenhologramms angeordnet sein.

Das Volumenhologramm kann seinerseits ebenfalls entweder ein fortlaufendes Endlosmuster oder ein Einzelbild-Dekor oder eine Kombination davon aufweisen.

Optional kann auf die opake Schicht 16 noch eine durchscheinende Farblackschicht 171 aufgebracht werden, um die nachfolgenden Schichten in ihrer optischen Wirkung einzufärben.

Um weitere optisch variable diffraktive oder refraktive Strukturen zu verwirklichen, umfasst die Dekorlage 17 eine Replizierlackschicht 172 mit einem Oberflächenrelief. Diese ist thermoplastisch oder UV-härtend und 1 µm bis 5 µm dick. Bevorzugt ist das Material der Replizierlackschicht 172 hochtransparent.

Bevorzugt umfasst dabei das Oberflächenrelief eine oder mehrere Reliefstrukturen ausgewählt aus der Gruppe diffraktives Gitter, Hologramm, Blazegitter, Lineargitter, Kreuzgitter, Hexagonalgitter, asymmetrische oder symmetrische Gitterstruktur, retroreflektierende Struktur, Mikrolinse, Mikroprisma, Beugungsstruktur Nullter Ordnung, Mottenaugenstruktur oder anisotrope oder isotrope Mattstruktur, oder eine Überlagerung von zwei oder mehr der vorgenannten Reliefstrukturen.

Direkt auf die Replizierlackschicht 172 wird eine Reflexionsschicht 173 aus Metall, bevorzugt aus Al, Cu, Ag, Au oder aus Legierungen der vorgenannten Metalle, aufgedampft, die zur Sichtbarmachung der diffraktiven Strukturen der Replizierlackschicht 172 dient. Alternativ ist auch eine HRI-Schicht (high refractive index), insbesondere aus ZnS, TiO₂ oder ZrO2 möglich. Alternativ kann auch eine Lackschicht mit metallischen Pigmenten vorgesehen sein.

Zweckmäßigerweise beträgt dabei die Schichtdicke der Reflexionsschicht von 5 nm bis 100 nm, bevorzugt von 10 nm bis 50 nm.

Auf die Reflexionsschicht 17 wird eine ein- oder mehrschichtige Kleberschicht 18 aufgebracht, die thermoplastisch, UV-härtend oder thermisch härtend ausgebildet sein kann. Unterschiedliche Teil-Schichten der Kleberschicht können dabei unterschiedliche Funktionen erfüllen, beispielsweise als Haftvermittler zu benachbarten Schichten oder zum Objekt, auf das der Mehrschichtkörper appliziert werden soll. Auch eine Funktion als Barriereschicht gegen die Diffusion von Stoffen aus und/oder in benachbarte Schichten ist möglich.

In den Figuren 2 bis 7 sind exemplarische Designs von derartigen Mehrschichtkörpern in der Draufsicht gezeigt.

Fig. 2 zeigt einen Mehrschichtkörper 1 mit zwei unregistrierten, fortlaufenden Endlosdekoren, die nicht aufeinander abgestimmt sind, sondern sich zufällig überlagern. In diesem Ausführungsbeispiel sind die Blüten 2 im Volumenhologramm realisiert. Dabei kann das Volumenhologramm entweder nur die Umrisse zeigen oder auch eine flächige Blüte, oder auch beides. Die Blätter 3 im Dekor sind durch die Durchbrechungen 161 der opaken Schicht 16 ausgeführt. Auch hierbei kann die Durchbrechung entweder den Umriss darstellen oder auch die ganze Blattfläche.

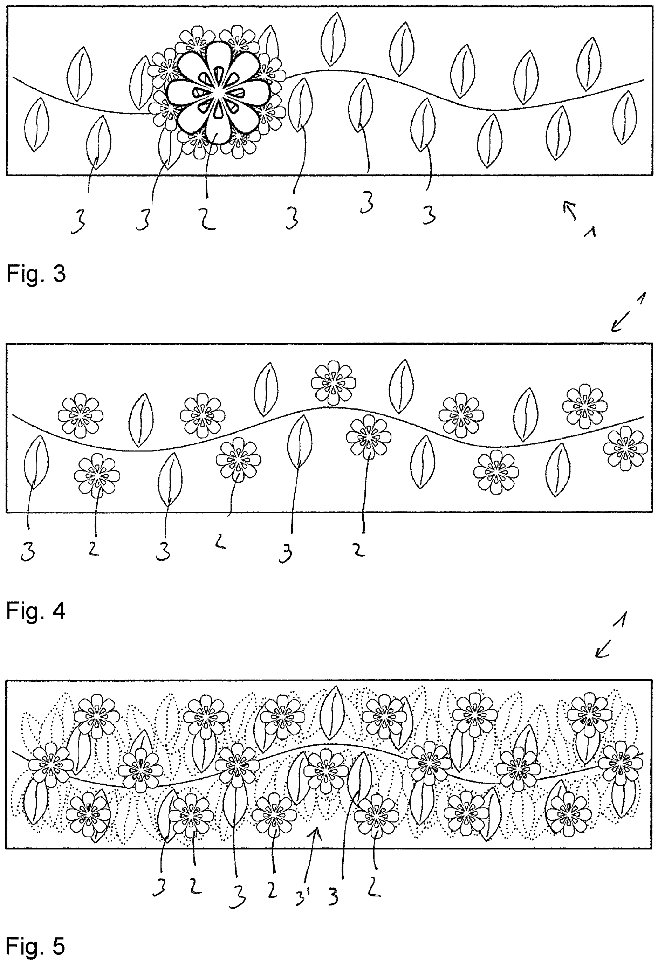

Wie Fig. 3 zeigt, kann auch ein Einzelbild, hier die Blüte 2 im Volumenhologramm mit einem Endlosdekor, hier die Blätter 3, in der opaken Schicht 16 kombiniert werden. Das Einzelbild ist zum Substrat registriert ausgeführt, das Endlosdekor unregistriert zum Substrat und auch zum Einzelbild.

Auch eine registerhaltige Anordnung der Dekore ist möglich, wie Fig. 4 zeigt. Die relative Position der beiden Dekore ist so zueinander ausgerichtet, dass beide Dekore zusammen ein Gesamtdekor bilden. D. h. im konkreten Fall sollen die Blüten 2 jeweils in Lücken zwischen den Blättern 3 angeordnet sein. Auch hier sind die Blüten 2 des Dekors von der Volumenhologrammschicht 14 gebildet, während die Durchbrechungen 161 der opaken Schicht 16 die Blätter 3 ausbilden.

Die opake Schicht 16 kann allein oder in Kombination mit der Dekorlage 17 auch komplexere Strukturen ausbilden. Im Ausführungsbeispiel nach Fig. 5 weist die opake Schicht 16 ein aus mehreren dunklen Farben bestehendes Dekor auf (gepunktet dargestellt), welches mit den beiden anderen Dekoren interagieren kann bzw. damit ein Gesamtdekor bilden kann. Hier ist auf der dunklen Schicht also ein Blättermotiv 3' vorgesehen, welches kombiniert ist mit Durchbrechungen 161, die ebenfalls in Form von Blättern 3 ausgebildet sind.

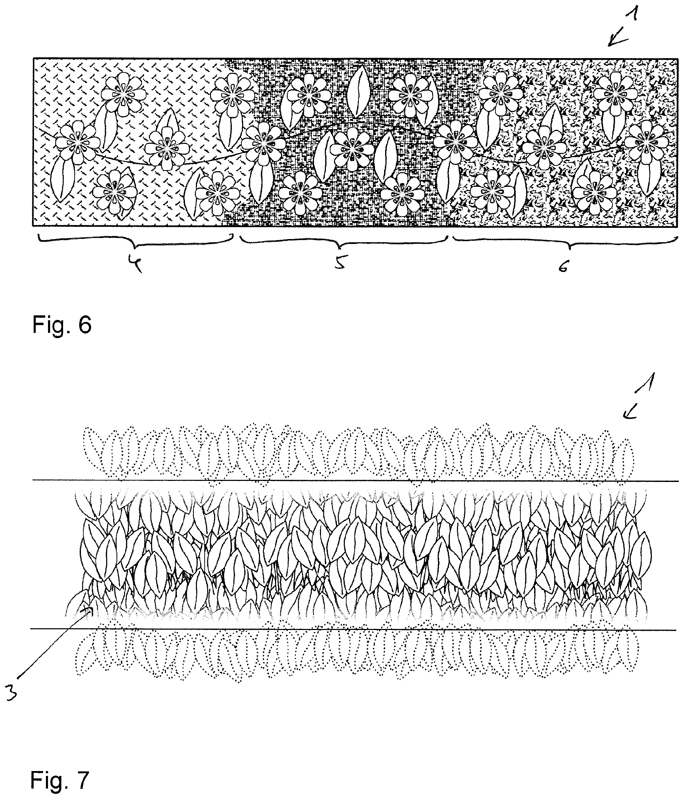

Das Dekor des Mehrschichtkörpers 1 kann ferner abschnittsweise variieren, wie in Fig. 6 dargestellt. Hier variiert die Gestaltung der opaken Schicht 16 und der Dekorlage 17 in den drei Teilbereichen 4, 5, 6 des Mehrschichtkörpers 1.

Dabei ist es auch möglich, in einem Abschnitt die Dekorlage 17 und auch die opake Schicht 16 vollständig auszusparen, um das Volumenhologramm 14 in diesem Abschnitt transparent zu gestalten. Beispielsweise liegt dann das Volumenhologramm 14 in diesem Abschnitt auf einem hellen Untergrund aus weißem Papier oder Plastik des Substrats 11, welcher in den anderen Abschnitten durch die opake Schicht 16 und die Dekorlage 17 abgedeckt ist. Dadurch können spezielle optische Effekte erzeugt werden, indem das Volumenhologramm 14 in dem ausgesparten Abschnitt mit einer geringeren Brillanz der optischen Effekte vorliegt als in den benachbarten Abschnitten, wo das Volumenhologramm 14 eine durch die opake Schicht 16 und die Dekorlage 17 hervorgerufene höhere Brillanz vorliegt. Insbesondere durch beide Abschnitte überlappende Designelemente des Volumenhologramms 14 können diese Designelemente durch den unterschiedlichen Untergrund in ihrer Brillanz lokal verändert werden. Beispielsweise kann eine durchgehende Linie des Volumenhologramms 14 in dem einen Abschnitt eine geringe Brillanz aufweisen und in dem benachbarten Abschnitt eine hohe Brillanz aufweisen, wobei beide Linienteile absolut lagegenau zueinander angeordnet sind.

Es ist auch möglich, dass in einem Abschnitt die Dekorlage 17 in den zweiten Bereichen 161 der opaken Schicht 16, in der die opake Schicht nicht vorhanden ist, ausgespart ist, um in diesen Bereichen das Substrat 11 sichtbar zu belassen. D. h. das Substrat 11 bildet den Hintergrund zu dem Volumenhologramm 14. Ist das Substrat 11 beispielsweise helles, insbesondere weißes Papier oder Kunststoff, wird die Brillanz des Volumenhologramms 14 entsprechend herabgesetzt bzw. verringert.

Das Substrat 11 kann jedoch auch bereits Farbschichten oder andere dekorative Schichten aufweisen, welche dann durch die zweiten Bereiche 161 der opaken Schicht 16 und durch das transparente Volumenhologramm 14 hindurch zumindest partiell sichtbar sind und ebenfalls einen Hintergrund zu dem Volumenhologramm 14 bilden. Durch das Hindurchscheinen des Substrats 11 durch die zweiten Bereiche 161 der opaken Schicht 16 lassen sich wiederum unverwechselbare und gleichzeitig schwer fälschbare optische Effekte erzeugen.

In Fig. 7 ist ein weiteres Ausführungsbeispiel gezeigt, in dem aus Gründen der Übersichtlichkeit lediglich das Dekor der opaken Schicht 16 gezeigt ist und die ebenfalls vorhandenen Dekore der Volumenhologrammschicht 14 und die Durchbrüche 161 in der opaken Schicht 16 nicht dargestellt sind.

Das Dekor der opaken Schicht 16 (mit durchgezogene Linien dargestellt) kann mit einem weiteren Dekor auf dem Objekt, auf das der Mehrschichtkörper 1 aufgebracht wird, (weiteres Dekor gepunktet dargestellt) interagieren bzw. damit kombiniert werden. Die horizontalen Linien zeigen die Außenkanten eines von dem Mehrschichtkörper 1 gebildeten Folienstreifens.

Beispielsweise kann die opake Schicht 16 zum Rand des Folienstreifens hinzu transparent auslaufen und ein unter und/oder neben dem Folienstreifen befindliches Druckmotiv nach und nach freilegen.

In diesem Beispiel weist die opake Schicht 16 ein Motiv aus Blättern 3 auf, welches zum Rand des Mehrschichtkörpers 1 hin an Transparenz zunimmt. Das Objekt, auf das der Mehrschichtkörper 1 aufgebracht werden soll, weist ebenso ein Blättermotiv auf und beide Blättermotive bilden eine Gesamtdarstellung.

### Bezugszeichenliste

- 1: Mehrschichtkörper
- 11: Substrat
- 111: Trägerlage
- 112: Ablöseschicht
- 12: Schutzschicht
- 13: Haftvermittlerschicht
- 14: Volumenhologrammschicht
- 15: Siegellackschicht
- 16: opake Schicht
- 161: Durchbrechungen
- 17: Dekorlage
- 171: Farblackschicht
- 172: Replizierlackschicht
- 173: Reflexionsschicht
- 18: Kleberschicht
- 2: Blüten
- 3: Blätter
- 4,5,6: Bereiche

## Patentansprüche

1. Mehrschichtkörper (1) mit einer Volumenhologrammschicht (14) und einer auf einer Oberfläche der Volumenhologrammschicht angeordneten partiellen opaken Schicht (16), die in einem ersten Bereich vorhanden und in einem zweiten Bereich (161) nicht vorhanden ist, wobei der Mehrschichtkörper eine Dekorlage (17) aufweist, wobei die partielle opake Schicht zwischen der Volumenhologrammschicht und der Dekorlage angeordnet ist,
**dadurch gekennzeichnet,**
**dass** die opake Schicht einen Lack und einen Farbstoff, ein Pigment oder ein Effektpigment umfasst und eine Luminanz L* im CIELAB-Farbraum von 0 bis 50 aufweist.

2. Mehrschichtkörper nach Anspruch 1,
**dadurch gekennzeichnet,**
**dass** die opake Schicht eine Luminanz L* im CIELAB-Farbraum von 0 bis 30 aufweist und/oder dass der erste Bereich der opaken Schicht 1 % bis 99 %, bevorzugt 50% bis 95 % der Volumenhologrammschicht bedeckt.

3. Mehrschichtkörper nach einem der vorhergehenden Ansprüche,
**dadurch gekennzeichnet,**
**dass** der Lack der opaken Schicht thermoplastisch ist und/oder dass die opake Schicht eine Schichtdicke von 1 µm bis 5 µm, bevorzugt von 1 µm bis 3 µm aufweist.

4. Mehrschichtkörper nach einem der vorhergehenden Ansprüche,
**dadurch gekennzeichnet,**
**dass** der erste und/oder zweite Bereich zumindest ein graphisches Element, insbesondere ein Motiv, ein Bild, ein Symbol, ein Logo und/oder ein alphanumerisches Zeichen ausbildet, wobei bevorzugt das graphische Element ein Endlosmotiv und/oder ein Einzelbildmotiv umfasst, und/oder im Register zu einem graphischen Element der Volumenhologrammschicht angeordnet ist.

5. Mehrschichtkörper nach einem der vorhergehenden Ansprüche,
**dadurch gekennzeichnet,**
**dass** die Volumenhologrammschicht eine Schichtdicke von 5 µm bis 100 µm, bevorzugt von 15 µm bis 25 µm aufweist.

6. Mehrschichtkörper nach einem der vorhergehenden Ansprüche,
**dadurch gekennzeichnet,**
**dass** die Dekorlage eine transparente Farblackschicht umfasst, wobei bevorzugt die Farblackschicht zumindest einen Farbstoff, ein Pigment, ein Effektpigment, ein Dünnschichtsystem, und/oder ein cholesterisches Flüssigkristallsystem umfasst.

7. Mehrschichtkörper nach Anspruch 6,
**dadurch gekennzeichnet,**
**dass** die Farblackschicht und/oder die opake Schicht in einer Komplementärfarbe zu einer Grundfarbe der Volumenhologrammschicht eingefärbt ist.

8. Mehrschichtkörper nach einem der vorhergehenden Ansprüche,
**dadurch gekennzeichnet,**
**dass** die Dekorlage eine Replizierschicht (172), insbesondere aus einem thermoplastischen oder UV-härtenden Lack, mit einem Oberflächenrelief ist oder umfasst, und/oder dass die Dekorlage eine Reflexionsschicht (173) umfasst.

9. Mehrschichtkörper nach einem der vorhergehenden Ansprüche,
**dadurch gekennzeichnet,**
**dass** der Mehrschichtkörper ein Substrat (11) umfasst, auf das die Volumenhologrammschicht aufgebracht ist, wobei bevorzugt das Substrat eine Trägerlage (111), insbesondere aus PET, PEN oder BOPP umfasst, die auf der der Volumenhologrammschicht abgewandten Seite des Substrats angeordnet ist und wobei bevorzugt eine Schichtdicke der Trägerlage von 6 µm bis 50 µm, bevorzugt von 12 µm bis 50 µm beträgt.

10. Verfahren zum Herstellen eines Mehrschichtkörpers nach einem der Ansprüche 1 bis 9 mit den Schritten:
- Bereitstellen der Volumenhologrammschicht (14),
- Aufbringen der partiellen opaken Schicht auf eine Oberfläche der Volumenhologrammschicht, wobei die partielle opake Schicht in einem ersten Bereich aufgebracht wird und einem zweiten Bereich (161) nicht aufgebracht wird, und wobei in einem weiteren Verfahrensschritt die Dekorlage (17) auf eine der Volumenhologrammschicht abgewandte Oberfläche der partiellen opaken Schicht aufgebracht wird.

11. Sicherheitselement mit einem Mehrschichtkörper nach einem der Ansprüche 1 bis 9.

12. Sicherheitsdokument, insbesondere Ausweisdokument, Passdokument, Visumsdokument, Führerschein, Kreditkarte, Banknote oder dergleichen, mit einem Sicherheitselement nach Anspruch 11.

13. Sicherheitsdokument nach Anspruch 12,
**dadurch gekennzeichnet,**
**dass** das Sicherheitsdokument ein Substrat mit einer weiteren Dekorlage umfasst, auf die das Sicherheitselement aufgebracht ist, wobei bevorzugt die Dekorlage des Sicherheitsdokuments eine transparente Farblackschicht umfasst, und wobei bevorzugt die Farblackschicht zumindest einen Farbstoff, ein Pigment, ein Effektpigment, ein Dünnschichtsystem, und/oder ein cholesterisches Flüssigkristallsystem umfasst und/oder in einer Komplementärfarbe zu einer Grundfarbe der Volumenhologrammschicht des Sicherheitselements eingefärbt ist.

14. Sicherheitsdokument nach Anspruch 13,
**dadurch gekennzeichnet,**
**dass** die Dekorlage des Sicherheitsdokuments eine Replizierschicht, insbesondere aus einem thermoplastischen oder UV-härtenden Lack, mit einem Oberflächenrelief ist oder umfasst und/oder die Dekorlage des Sicherheitsdokuments eine Reflexionsschicht umfasst.

## Claims

1. Multilayer body (1) having a volume hologram layer (14) and a partial opaque layer (16) arranged on a surface of the volume hologram layer, said partial opaque layer being present in a first region and not present in a second region (161), wherein the multilayer body has a decorative ply (17), wherein the partial opaque layer is arranged between the volume hologram layer and the decorative ply,
**characterised in that**
the opaque layer comprises a lacquer and a dye, a pigment or an effect pigment and has a luminance L* in the CIELAB colour space of from 0 to 50.

2. Multilayer body according to claim 1,
**characterised in that**
the opaque layer has a luminance L* in the CIELAB colour space of from 0 to 30, and/or the first region of the opaque layer covers 1% to 99%, preferably 50% to 95% of the volume hologram layer.

3. Multilayer body according to one of the preceding claims,
**characterised in that**
the lacquer of the opaque layer is thermoplastic, and/or the opaque layer has a layer thickness of from 1µm to 5µm, preferably from 1µm to 3µm.

4. Multilayer body according to one of the preceding claims,
**characterised in that**
the first and/or second region forms at least one graphical element, in particular a motif, an image, a symbol, a logo and/or an alphanumerical sign, wherein the graphical element preferably comprises an endless motif and/or an individual image motif and/or is arranged in register to a graphical element of the volume hologram layer.

5. Multilayer body according to one of the preceding claims,
**characterised in that**
the volume hologram layer has a layer thickness of from 5µm to 100µm, preferably from 15µm to 25µm.

6. Multilayer body according to one of the preceding claims,
**characterised in that**
the decorative ply comprises a transparent colour lacquer layer, wherein the colour lacquer layer preferably comprises at least one dye, one pigment, one effect pigment, one thin film layer system, and/or one cholesteric liquid crystal system.

7. Multilayer body according to claim 6,
**characterised in that**
the colour lacquer layer and/or the opaque layer is dyed in a complementary colour to a base colour of the volume hologram layer.

8. Multilayer body according to one of the preceding claims,
**characterised in that**
the decorative ply is or comprises a replicate layer (172), in particular made of a thermoplastic or UV-curing lacquer, having a surface relief, and/or the decorative ply comprises a reflection layer (173).

9. Multilayer body according to one of the preceding claims,
**characterised in that**
the multilayer body comprises a substrate (11), on which the volume hologram layer is applied, wherein the substrate preferably comprises a carrier ply (111), in particular made of PET, PEN or BOPP, which is arranged on the side of the substrate facing away from the volume hologram layer, and wherein a layer thickness of the carrier ply is preferably from 6µm to 50µm, preferably from 12µm to 50µm.

10. Method for producing a multilayer body according to one of claims 1 to 9 having the following steps:
- Providing the volume hologram layer (14),
- Applying the partial opaque layer onto a surface of the volume hologram layer, wherein the partial opaque layer is applied in a first region and is not applied in a second region (161), and wherein, in a further method step, the decorative ply (17) is applied to a surface of the partial opaque layer facing away from the volume hologram layer.

11. Security element having a multilayer body according to one of claims 1 to 9.

12. Security document, in particular identity document, passport document, visa document, driving licence, credit card, bank note or similar, having a security element according to claim 11.

13. Security document according to claim 12,
**characterised in that**
the security document comprises a substrate having a further decorative ply, on which the security element is applied, wherein the decorative ply of the security document preferably comprises a transparent colour lacquer layer, and wherein the colour lacquer layer preferably comprises at least one dye, one pigment, one effect pigment, one thin film layer system and/or one cholesteric liquid crystal system and/or is dyed in a complementary colour to a base colour of the volume hologram layer of the security element.

14. Security document according to claim 13,
**characterised in that**
the decorative ply of the security document is or comprises a replicate layer, in particular made of a thermoplastic or UV-curing lacquer, having a surface relief, and/or the decorative ply of the security document comprises a reflection layer.

## Revendications

1. Corps multicouche (1) avec une couche d'hologramme volumique (14) et une couche opaque (16) partielle disposée sur une surface de la couche d'hologramme volumique, qui est présente dans une première zone et qui n'est pas présente dans une deuxième zone (161), dans lequel le corps multicouche présente une strate décorative (17), dans lequel la couche opaque partielle est disposée entre la couche d'hologramme volumique et la strate décorative,
**caractérisé en ce**
**que** la couche opaque comprend un vernis et un colorant, un pigment ou un pigment à effet, et
présente une luminance L* dans l'espace colorimétrique CIELAB de 0 à 50.

2. Corps multicouche selon la revendication 1,
**caractérisé en ce**
**que** la couche opaque présente une luminance L* dans l'espace colorimétrique CIELAB de 0 à 30, et/ou que la première zone de la couche opaque couvre 1 % à 99 %, de manière préférée 50 % à 95 % de la couche d'hologramme volumique.

3. Corps multicouche selon l'une quelconque des revendications précédentes,
**caractérisé en ce**
**que** le vernis de la couche opaque est thermoplastique, et/ou que la couche opaque présente une épaisseur de couche de 1 µm à 5 µm, de manière préférée de 1 µm à 3 µm.

4. Corps multicouche selon l'une quelconque des revendications précédentes,
**caractérisé en ce**
**que** la première et/ou deuxième zone réalisent au moins un élément graphique, en particulier un motif, une image, un symbole, un logo et/ou un caractère alphanumérique, dans lequel de manière préférée l'élément graphique comprend un motif sans fin et/ou un motif d'image unique, et/ou est disposé dans le registre par rapport à un élément graphique de la couche d'hologramme volumique.

5. Corps multicouche selon l'une quelconque des revendications précédentes,
**caractérisé en ce**
**que** la couche d'hologramme volumique présente une épaisseur de couche de 5 µm à 100 µm, de manière préférée de 15 µm à 25 µm.

6. Corps multicouche selon l'une quelconque des revendications précédentes,
**caractérisé en ce**
**que** la strate décorative comprend une couche de vernis de couleur transparente, dans lequel de manière préférée la couche de vernis de couleur comprend au moins un colorant, un pigment, un pigment à effet, un système à couches fines et/ou un système à cristaux liquides cholestérique.

7. Corps multicouche selon la revendication 6,
**caractérisé en ce**
**que** la couche de vernis de couleur et/ou la couche opaque sont colorées dans une couleur complémentaire à une couleur de base de la couche d'hologramme volumique.

8. Corps multicouche selon l'une quelconque des revendications précédentes,
**caractérisé en ce**
**que** la strate décorative est ou comprend une couche de réplication (172), en particulier composée d'un vernis thermoplastique ou durcissant aux UV, avec un relief de surface, et/ou que la strate décorative comprend une couche réfléchissante (173).

9. Corps multicouche selon l'une quelconque des revendications précédentes,
**caractérisé en ce**
**que** le corps multicouche comprend un substrat (11), sur lequel la couche d'hologramme volumique est appliquée, dans lequel de manière préférée le substrat comprend une strate de support (111), en particulier composée de PET, PEN ou BOPP, qui est disposée sur le côté, opposé à la couche d'hologramme volumique, du substrat et dans lequel de manière préférée une épaisseur de couche de la strate de support est de 6 µm à 50 µm, de manière préférée de 12 µm à 50

10. Procédé pour fabriquer un corps multicouche selon l'une quelconque des revendications 1 à 9 avec les étapes :
- de fourniture de la couche d'hologramme volumique (14),
- d'application de la couche opaque partielle sur une surface de la couche d'hologramme volumique, dans lequel la couche opaque partielle est appliquée dans une première zone et n'est pas appliquée dans une deuxième zone (161), et dans lequel dans une autre étape de procédé, la strate décorative (17) est appliquée sur une surface, opposée à la couche d'hologramme volumique, de la couche opaque partielle.

11. Élément de sécurité avec un corps multicouche selon l'une quelconque des revendications 1 à 9.

12. Document de sécurité, en particulier pièce d'identité, passeport, visa, permis de conduire, carte de crédit, billet de banque ou similaire, avec un élément de sécurité selon la revendication 11.

13. Document de sécurité selon la revendication 12,
**caractérisé en ce**
**que** le document de sécurité comprend un substrat avec une autre strate décorative,
sur laquelle l'élément de sécurité est appliqué, dans lequel de manière préférée la strate décorative du document de sécurité comprend une couche de vernis de couleur transparente, et dans lequel de manière préférée la couche de vernis de couleur comprend au moins un colorant, un pigment, un pigment à effet, un système à couches fines, et/ou un système à cristaux liquides cholestérique, et/ou, est colorée dans une couleur complémentaire à une couleur de base de la couche d'hologramme volumique de l'élément de sécurité.

14. Document de sécurité selon la revendication 13,
**caractérisé en ce que** la strate décorative du document de sécurité est ou comprend une couche de réplication, en particulier composée d'un vernis thermoplastique ou durcissant aux UV, avec un relief en surface, et/ou la strate décorative du document de sécurité comprend une couche réfléchissante.
